# EUROPEAN PATENT SPECIFICATION

(11) **EP 3 784 418 B1**
(45) Date of publication and mention of the grant of the patent: **09.10.2024**
(21) Application number: 19792990.4
(22) Date of filing: 18.04.2019
(51) Int. Cl.: B07C 5/00, B25J 9/02, B65G 17/00, B65G 47/00, B65G 47/18, B25J 19/06, B07C 5/36, B25J 9/00

(54) **WASTE SORTING GANTRY ROBOT COMPRISING AN INTEGRATED MAINTENANCE HATCH**
ABFALLSORTIERENDER PORTALROBOTER MIT EINER INTEGRIERTEN WARTUNGSLUKE
ROBOT PORTIQUE DE TRI DE DÉCHETS COMPRENANT UNE TRAPPE DE MAINTENANCE INTÉGRÉE

(30) Priority: 22.04.2018 SE 1830139
(43) Date of publication of application: 03.03.2021
(73) Proprietor: MP ZenRobotics Oy, 01510 Vantaa, Helsinki (FI)
(72) Inventor: TAALAS, Timo, 00320 Helsinki (FI); FAARINEN, Aku, 01690 Vantaa (FI)
(74) Representative: Invent Horizon IP
(86) International application number: PCT/FI2019/050321
(87) International publication number: WO 2019/207203

(56) References cited:
- EP-A1- 0 706 838
- EP-A1- 1 918 479
- EP-A2- 2 476 813
- CN-A- 105 372 510
- CN-A- 107 363 405
- CN-A- 107 650 139
- CN-A- 107 650 139
- JP-A- H10 202 571
- JP-A- H11 198 076

## Description

The present invention relates to a waste sorting robot for sorting waste objects.

In the waste management industry, industrial and domestic waste is increasingly being sorted in order to recover and recycle useful components. Each type of waste, or "fraction" of waste can have a different use and value. If waste is not sorted, then it often ends up in landfill or incineration which has an undesirable environmental and economic impact.

Industrial waste may be passed to waste management centres because handling and disposing of waste is time consuming and requires specialist equipment. Accordingly, a waste management centre may sort waste to collect the most valuable and useful fractions. For example, industrial waste may include mixed wood and metal fractions (as well as other fractions) and sorted wood and metal fractions can be reused and sold to recyclers. Waste which is sorted into a substantially homogeneous fraction is more desirable and economical for recyclers. This is because less processing of the material is required before being recycled into new products and materials.

It is known to sort domestic and industrial waste in different ways. For many years waste has been manually sorted by hand on a conveyor belt. However hand sorting waste can be arduous and dangerous to the human sorter depending on the type of industrial or domestic waste being sorted. Furthermore, some waste sorting plants which use human sorters require multiple shifts in order to increase the output of sorted waste.

One approach for improving the safety and the output of waste sorting is to automate one or more aspects of the waste sorting. The automation can comprise a controller sending control and movement instructions to a manipulator for interacting with the physical objects. The combination of a controller sending control instructions to a manipulator can also be referred to as a "robot".

One such robotic waste sorting system is a "delta" robot suspended over a conveyor belt which moves objects to be sorted. The conveyor belt passes under the delta robot and within a working area of the delta robot. A working area of a robot is an area on a surface within which the robot is able to reach and manipulate an object. A working volume is the physical space within which the robot is able to move and manipulate an object. The working volume is determined by the height above the working area where the robot can manipulate an object.

The working volume / area can also include chutes which are not part of the surface of a conveyor belt.

A delta robot comprises a servo housing and a plurality of arms which are connected to one or more servos for moving the arms. The arms extend down from the servo housing to a base which is coupled to a manipulator. The arms are connected via universal joints at the base.

Whilst a delta robot can be relatively effective at picking small light objects, the delta robot is not suitable for lifting heavy objects. Furthermore since the manipulator is suspended from the servo housing, the servos must have sufficient power to move the manipulator and the object. This means that the manipulators coupled to delta robots must be as light as possible to increase the maximum lift capacity of the delta robot.

Disadvantageously, the dimensions of the working volume for a delta robot varies across the width of the working space. In particular, the working volume is an inverted cone and becomes narrower as the manipulator moves away from the servo housing. In practice, this may mean that a delta robot cannot manipulate objects at the same height across the width of a conveyor belt and that delta robots are only suitable for working with narrow conveyor belts. This can be problematic because objects can be piled on each other making identifying and picking objects harder. This can limit the design choices and use applications when using a delta robot for waste sorting.

A delta robot is not particularly robust and the universal joints of a delta robot are particularly susceptible to wear and malfunction. Another consideration of a delta robot is that the movement of one or more arms causes movement in the other arms. Accordingly, whenever a delta robot moves, control instructions must be sent to each servo because each arm must move when the manipulator of the delta robot is moved. The non-linear control instructions to move the arms of the delta robot means that increased computational processing is required to control and move the delta robot within the working area / working volume.

Another known robot for automatic sorting of waste is a "gantry" robot. A gantry robot comprises a frame or gantry which engages the floor and bridges over a working area such as a conveyor belt. The gantry supports the weight of the manipulator and an object that the manipulator grips. The gantry robot comprises one or more axes of control which move in a straight line (e.g. linear). Normally the axes of control of a gantry robot are arranged at right angles to each other.

A gantry robot may pick objects from the conveyor belt and drop the picked objects into a chute. A chute comprises an opening which is in communication with a bin or another conveyor belt for receiving a particular fraction of waste. The picked objects placed in the bin or on the conveyor belt can then be moved to another location or step in waste processing. This means a picked object of a certain waste fraction is dropped into the corresponding chute. Known gantry robots have a four or more chutes located at the four corners of the rectangular working space for receiving the different fractions. A problem with this arrangement is that the manipulator is required to travel a large distance if subsequent picks are from differing fractions. This means that a manipulator may be able to successfully pick and drop fewer objects into the correct bin due to the required travel time of the manipulator.

Delta and gantry robots used for waste sorting require regular maintenance because the working environment is dusty. The size of configuration of waste sorting robots can mean that they can be difficult to access and perform maintenance. In particular, waste sorting gantry robots can be assembled and operated in environments which are dangerous. It is desirable to make maintenance of the waste sorting robots as simple as possible to reduce the down time of the waste sorting robot.

CN105372510A discloses an automatic shielding test device for a four-shaft direct manipulator. The automatic shielding test device is used for testing an electronic communication product in a shielded environment. The automatic shielding test device for the four-shaft direct manipulator comprises the components of a cabinet, a material inlet mechanism, a four-shaft direct manipulator, at least one shielding testing unit, a material discharging mechanism and a testing control mechanism.

JPH11198076A discloses a holding position distinguishing device and sorter.

CN107650139A discloses a sorting mechanical arm for linear output of forming machine parts. The sorting mechanical arm comprises a linear output machine frame, a sorting mechanical arm body, an electromagnet, a portal frame and a linear output conveying belt.

JPH10202571A discloses a robot system for screening specified object in waste.

Embodiments of the present invention aim to address the aforementioned problems.

According to an aspect of the present invention there is a waste sorting robot according to claim 1.

Accordingly the chute is located at a predetermined, known location with respect to the gantry frame. This means that the waste sorting gantry robot can be programmed to operate correctly in the factory and does not have to be configured according to the installation site.

Optionally the chute comprises a chute opening positioned at a predetermined distance from the conveyor. This means that the manipulator and controller do not have to be reprogrammed for each installation due to varying size and relative position of the chute with respect to the gantry frame. Indeed, the chute and chute opening will always remain in a fixed position, so the control and installation of the manipulator is simpler. Optionally the chute is integral with the gantry frame. This means that a user of the waste sorting gantry frame cannot move the chute relative to the gantry frame after installation. This means that the waste sorting robot cannot accidentally misalign the chute with respect to the gantry frame.

According to the invention, the gantry frame comprises a maintenance door for accessing the manipulator and / or the conveyor. According to the invention, the maintenance door is moveable to a position which covers at least a portion of the chute opening. According to the invention, the maintenance door covers the chute opening when the manipulator and / or the conveyor is accessible. Optionally the maintenance door is pivotable about a hinge at the bottom of the maintenance door. This means that the manipulator and the waste sorting gantry robot can be easily accessible. The maintenance door covers the chute and prevents an operator from falling down or tripping on the chute whilst inspecting the manipulator or other parts of the waste sorting gantry robot.

Optionally the maintenance door comprises steps. Advantageously, the steps provide additional grip and stability for an operator when climbing up to inspect the waste sorting gantry robot.

Optionally the waste gantry robot comprises a lock-out sensor wherein the maintenance door actuates the lock-out sensor when the maintenance door is opened. This means that the waste sorting gantry robot is switched off when an operator is inspecting the internal parts. This helps safeguard the operator during maintenance and inspection.

Optionally the waste gantry robot comprises at least one latch for opening the maintenance door. Optionally the maintenance door abuts the conveyer when the maintenance door is in an open position. This means that the maintenance door rests and remains in place when in the open position. Optionally the maintenance door is covered by an external access door.

In this way, the maintenance door cannot be accidentally opened because the operator must open an external door before opening the maintenance door first.

Optionally the opening is between 20cm to 50cm wide by 30cm to 80cm long. This means that the opening is sufficiently large to receive most types and sizes of waste objects.

Optionally the opening is adjacent to the conveyor in the working area. This means that the manipulator does not have to travel far to throw or drop a picked object into the chute.

Optionally at least a portion of the chute is integral with the gantry frame. Optionally the chute is in communication with a receptacle for receiving the sorted waste objects. Optionally the gantry frame comprises a floor plate comprising an opening connected to the chute. This means that if a hole in the floor for receiving the sorted objects is larger than the chute opening, the sorted objects can fall through the hole whilst protecting the operator from falling down the hole. Optionally, the gantry frame comprises a conversion adaptor for coupling the chute to a floor hole wherein the dimensions of the chute and the floor hole are different. This means that the chute which is fixed to the gantry frame can be coupled to a hole in the floor independent of the size or location of the floor hole.

Optionally the waste sorting robot comprises an enclosure mounted to the gantry frame. Optionally the enclosure surrounds the chute. This means that the enclosure can protect the manipulator. Furthermore, the enclosure prevents the operator from accidentally touching the manipulator during operation.

Various other aspects and further embodiments are also described in the following detailed description and in the attached claims with reference to the accompanying drawings, in which:
Figure 1 shows a perspective schematic view of the waste sorting gantry robot;
Figure 2 shows another perspective schematic view of the waste sorting gantry robot;
Figure 3 shows a schematic plan view of a working area of the waste sorting gantry robot;
Figure 4 shows a schematic cross-sectional view of the waste sorting gantry robot; and
Figure 5 shows a schematic perspective partial view of the waste sorting gantry robot.

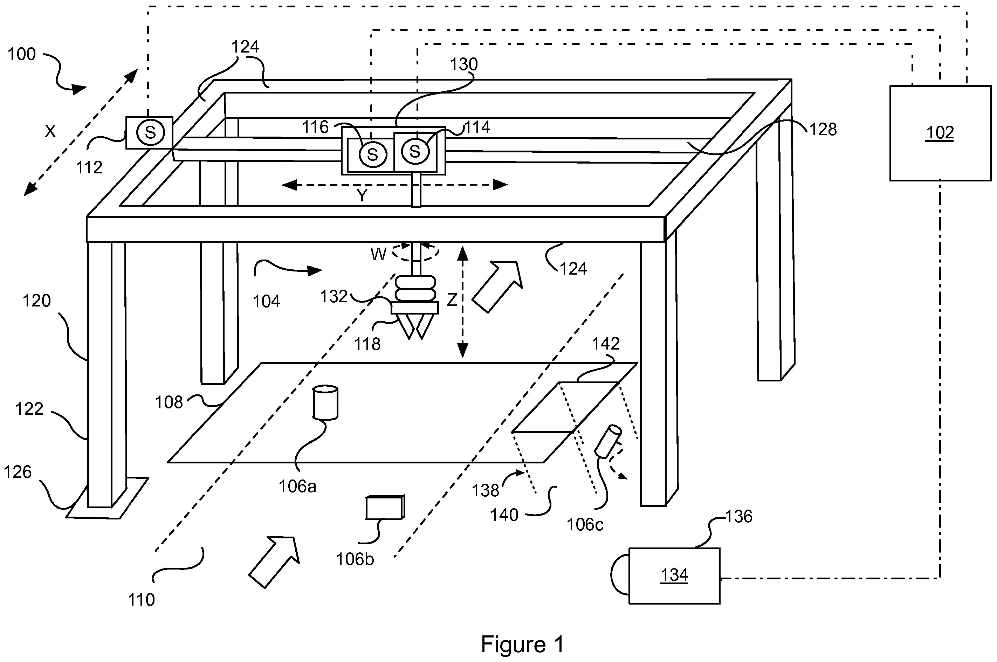

Figure 1 shows a schematic perspective view of a waste sorting robot 100. In some embodiments, the waste sorting robot 100 can be a waste sorting gantry robot 100. In other embodiments other types of waste sorting robots can be used. For example, the waste sorting robot 100 can be other types of robot such as robot arms, SCARA assemblies, or delta robots.

In some embodiments, the waste sorting robot 100 is a Selective Compliance Assembly Robot Arm (SCARA). The waste sorting SCARA 100 may move in the X, Y, and Z planes like the waste sorting gantry robot, but incorporate movement in a theta axis at the end of the Z plane to rotate the end-of-arm tooling e.g. the gripper assembly 132. In some embodiments, the waste sorting robot 100 is a four axis SCARA robot 100 that consists of an inner link arm (not shown) that rotates about the Z-axis. The inner link arm is connected to an outer link arm (not shown) that rotates about a Z elbow joint (not shown). The Z elbow joint is connected to a wrist axis (not shown) that moves up and down and also rotates about Z. In some embodiments the waste sorting SCARA 100 comprises an alternative configuration which has the linear Z motion as the second axis.

For the purposes of brevity, the embodiments will be described in reference to waste sorting gantry robots 100, but any of the other aforementioned robot types can be used instead or in addition to the water sorting gantry robot 100.

The waste sorting gantry robot comprises a controller 102 for sending control and movement instructions to a manipulator 104 for interacting with the physical objects 106a, 106b, 106c. The combination of a controller sending control instructions to a manipulator can also be referred to as a "robot". The controller 102 is located remote from the manipulator 104 and is housed in a cabinet (not shown). In other embodiments, the controller 102 can be integral with the manipulator and / or a gantry frame 120.

The manipulator 104 physically engages and moves the objects 106a, 106b, 106c that enters the working area 108. The working area 108 of a manipulator 104 is an area within which the manipulator 104 is able to reach and interact with the object 106a 106b, 106c. The working area 108 as shown in Figure 1 is projected onto the conveyor belt 110 for the purposes of clarity. The manipulator 104 is configured to move at variable heights above the working area 108. In this way, the manipulator 104 is configured to move within a working volume defined by the height above the working area 108 where the robot can manipulate an object. The manipulator 104 comprises one or more components for effecting relative movement with respect to the objects 106a, 106b, 106c. The manipulator 104 will be described in further detail below.

The physical objects 106a, 106b, 106c are moved into the working area 108 by a conveyor belt 110. The path of travel of the conveyor belt 110 intersects with the working area 108. This means that every object 106a, 106b, 106c that is moving on the conveyor belt 110 will pass through the working area 108. The conveyor belt 110 can be a continuous belt, or a conveyor belt formed from overlapping portions. The conveyor belt 110 can be a single belt or alternatively a plurality of adjacent moving belts.

In other embodiments, the physical objects 106a, 106b, 106c can be conveyed into the working area 108 via other conveying means. The conveyor can be any suitable means for moving the objects 106a, 106b, 106c into the working area 108. For example, the objects 106a, 106b, 106c are fed under gravity via slide (not shown) to the working area 108. In other embodiments, the objects can be entrained in a fluid flow, such as air or water, which passes through the working area 108.

The direction of the conveyor belt 110 is shown in Figure 1 by two arrows. The objects 106a, and 106b are representative of different types of objects to be sorted having not yet been physically engaged by the manipulator 104. In contrast, the object 106c is an object that has been sorted into a particular type of object. In some embodiments, the manipulator 104 interacts with only some of the objects 106c. For example, the waste sorting gantry robot 100 is only removing a particular type of objects. In other scenarios, the manipulator 104 will interact and sort every object 106a, 106b, 106c which is on the conveyor belt 110.

In some embodiments, the objects to be sorted are waste products. The waste products can be any type of industrial, commercial, domestic, or any other waste which requires sorting and processing. Unsorted waste material comprises a plurality of fractions of different types of waste. Industrial waste can comprise fractions of, for example, metal, wood, plastic, hardcore and one or more other types of waste. In other embodiments, the waste can comprise any number of different fractions of waste formed from any type or parameter of waste. The fractions can be further subdivided into more refined categories. For example, metal can be separated into steel, iron, aluminium etc. Domestic waste also comprises different fractions of waste such as plastic, paper, cardboard, metal, glass and / or organic waste.

A fraction is a category of waste that the waste can be sorted into by the waste sorting gantry robot 100. A fraction can be a standard or homogenous composition of material, such as aluminium, but alternatively a fraction can be category of waste defined by a customer or user. In some embodiments, the waste can be sorted according to any parameter. A non-limiting list of parameters for dividing unsorted waste into fractions is as follows: material, previous purpose, size, weight, colour, opacity, economic value, purity, combustibility, whether the objects are ferrous or any other variable associated with waste objects. In a further embodiment, a fraction can comprise one or more other fractions. For example, one fraction can comprise a paper fraction, a cardboard fraction, and a wood fraction to be combinable to be a combustible fraction. In other embodiments, a fraction can be defined based on the previous purpose of the waste object, for example plastic tubes used for silicone sealant. It may be desirable to separate out some waste objects because they are contaminated and cannot be recycled.

The objects are fed from a hopper or other stored source of objects onto the conveyor belt 110. Alternatively, the waste objects are fed from another conveyor belt (not shown) and there is no source of stored waste objects. In this case, the additional conveyor belt can be fed manually from e.g. an excavator. Optionally, the objects 106a, 106b, 106c can be preprocessed before being placed on the conveyor belt. For example, the objects can be washed, screened, crushed, ripped, shaken, vibrated to prepare the material before sorting. Alternatively, the waste objects 106a, 106b, 106c can be sorted with another robot or mechanical device. The objects 106a, 106b, 106c can be optionally pre-sorted before being placed on the conveyor belt 110. For example, ferrous material can be removed from the unsorted waste by passing a magnet in proximity to the conveyor belt 110. Large objects can be broken down into pieces of material which are of a suitable size and weight to be gripped by the manipulator 104.

The manipulator 104 is configured to move within the working volume. The manipulator 104 comprises one or more servos for moving the manipulator 104 in one or more axes. In some embodiments, the manipulator 104 is moveable along a plurality of axes. In some embodiments, the manipulator is moveable along three axes which are substantially at right angles to each other. In this way, the manipulator 104 is movable in an X-axis which is parallel with the longitudinal axis of the conveyor belt 110 ("beltwise"). Additionally, the manipulator 104 is movable across the conveyor belt 110 in a Y-axis which is perpendicular to the longitudinal axis of the conveyor belt 110 ("widthwise"). The manipulator 104 is movable in a Z-axis which is in a direction normal to the working area 108 and the conveyor belt 110 ("heightwise"). Optionally, the manipulator 104 can rotate about one or more axes. In some embodiments a gripper assembly 132 coupled to the manipulator 104 can rotate about a W-axis. The gripper assembly 132 is discussed in further detail below.

The directions of movement of the manipulator 104 within the working space along the X-axis, Y-axis and the Z-axis are shown by the two headed arrows with dotted lines. The manipulator 104 is moved with respect to the conveyor belt 110 by an X-axis servo 112, a Y-axis servo 114 and a Z-axis servo 116 respectively along the X-axis, the Y-axis and the Z-axis. The servos 112, 114, 116 are connectively connected to the controller 102 and controller 102 is configured to issue instructions for actuating one or more servos 112, 114, 116 to move the manipulator 104 within the working space. The connections between the servos 112, 114, 116 and the controller 102 are represented by dotted lines. Each connection between the servo 112, 114, 116 and the controller 102 can comprises one or more data and / or power connections.

Since the directions of movement of the manipulator 104 are substantially perpendicular to each other, movement of the manipulator in one of the axes is independent of the other axes. This means that the manipulator 104 movement can be defined in a cartesian coordinate frame of reference which makes processing movement instructions by the controller 102 simpler.

As mentioned previously, the manipulator 104 is mounted on a frame 120. In some embodiments, the frame 120 can be a gantry frame 120. In other embodiments, the frame 120 can be other structures suitable for supporting the manipulator 104 above the working area 108. For example, the frame 120 can be a structure for suspending the manipulator 104 above the working area with rods and / or cables. Hereinafter, the frame 120 will be referred to a gantry frame 120 but can be applicable to other frames for supporting a manipulator 104.

The gantry frame 120 comprises vertical struts 122 which engage with the floor or another substantially horizontal surface. In some embodiments, the vertical struts 122 can be tilted upright struts. In this way, the tilted upright struts are angled to the vertical. The tilted upright struts may be required to mount the gantry frame 120 to the floor in a non-standard installation. Figure 1 shows the gantry frame 120 comprising four vertical struts 122 coupled together by horizontal beams 124. In other embodiments, the horizontal beams 124 can be tilted lateral beams 124. This may be required if the waste sorting gantry robot 100 is being installed in a small or unusual space. In other embodiments, there can be any suitable number of vertical struts 122. The beams 124 and struts 122 are fixed together with welds, bolts or other suitable fasteners. Whilst the horizontal beams 124 are shown in Figure 1 to be located above the conveyor belt 110, one or more horizontal beams 124 can be positioned at different heights. For example, one or more horizontal beams 124 can be positioned underneath the conveyor belt. This can lower the centre of mass of the gantry frame 120 and make the entire waste sorting gantry robot 100 more stable if the vertical struts 122 are not secured to the floor.

The beams 124 and the struts 122 are load bearing and support the weight of the manipulator 104 and an object 106a, 106b, 106c that the manipulator 104 grasps. In some embodiments, the beams 124 and struts 122 are made from steel but other stiff, lightweight materials such as aluminium can be used. The vertical struts 122 can each comprise feet 126 comprising a plate through which bolts (not shown) can be threaded for securing the struts 122 to the floor. For the purposes of clarity, only one foot 126 is shown in Figure 1, but each strut 122 can comprise a foot 126. In other embodiments, there are no feet 126 or fasteners for securing the gantry frame 120 to the floor. In this case, the gantry frame rests on the floor and the frictional forces between the gantry frame and the floor are sufficient to prevent the waste sorting gantry robot from moving with respect to the floor.

The manipulator 104 comprises at least one movable horizontal beam 128 which is movably mounted on the gantry frame 120. The moveable beam 128 can be mounted in a beam carriage (not shown). The moveable horizontal beam 128 is movably mounted on one or more of the other fixed horizontal beams 124 of the gantry frame 120. The moveable horizontal beam 128 is movable in the X-axis such that the manipulator 104 moves in the X-axis when the movable horizontal beam moves in the X-axis. The moveable horizontal beam 128 is mounted to the fixed horizontal beams 124 via an X-axis servo mechanism 112. In some embodiments, the servo 112 is coupled to the moveable horizontal beam 128 via a belt drive. In other embodiments, the servo is coupled to the moveable horizontal beam via a rack and pinion mechanism. In some embodiments, other mechanisms can be used to actuate movement of the moveable horizontal beam along the X-axis. For example, a hydraulic or pneumatic system can be used for moving the movable horizontal beam 128.

The X-axis servo 112 can be mounted on the moveable beam 128 or on the fixed horizontal beams 124. It is preferable for the X-axis servo to be mounted on the fixed horizontal beams 124 such that the X-axis servo does not have to exert force moving its own weight.

A manipulator carriage 130 is movably mounted on the moveable horizontal beam 128. The manipulator shuttle 130 is moveable along the longitudinal axis of the movable horizontal beam 128. In this way, the manipulator carriage 130 is movable in the Y-axis relative to the moveable beam 128. In some embodiments, the manipulator carriage 130 comprises a Y-axis servo mechanism 114 for moving the manipulator carriage 130 along the Y-axis. In other embodiments, the Y-axis servo 114 is not mounted in the manipulator carriage 130 and manipulator carriage 130 moves with respect to the Y-axis servo. In some embodiments, the servo 114 is coupled to the moveable horizontal beam 128 via a belt drive. In other embodiments, the servo 114 is coupled to the moveable horizontal beam 128 via a rack and pinion mechanism. In some embodiments, other mechanisms can be used to actuate movement of the moveable horizontal beam along the Y-axis. For example, a hydraulic or pneumatic system can be used for moving the manipulator carriage 130.

When the manipulator carriage 104 moves along the Y-axis, a gripper assembly 132 also moves in the Y-axis. The gripper assembly 132 is movably mounted to the manipulator carriage 130. The gripper assembly 132 is movable in the Z-axis in order to move the manipulator 104 heightwise in the Z-axis direction.

In some embodiments, the gripper assembly 132 comprises a Z-axis servo mechanism 116 for moving the gripper assembly 132 along the Z-axis. In other embodiments, the Z-axis servo 114 is not mounted in the gripper assembly 132 but is mounted in the manipulator carriage 130. In this way, the gripper assembly 132 moves with respect to the Z-axis servo 116. In some embodiments, the servo 116 is coupled to the gripper assembly 132 via a belt drive. In other embodiments, the servo 116 is coupled to the gripper assembly 132 via a rack and pinion mechanism. In some embodiments, other mechanisms can be used to actuate movement of the moveable horizontal beam along the Z-axis. For example, a hydraulic or pneumatic system can be used for moving the gripper assembly 132.

As mentioned, the manipulator 104 as shown in Figure 1 comprises a gripper assembly 132. In one embodiment, the gripper assembly 132 comprises a pair of jaws 118 configured to grip objects 106a, 106b, 106c. A gripper assembly 132 comprising a pair of jaws 118 is also known as a "finger gripper." The gripper jaws 118 are actuated with a servo (not shown) for opening and closing the jaws 118. The servo for the gripper jaws 118 is connectively coupled to the controller 102 so that the controller 102 can actuate the opening and closing of the jaws 118. In some embodiments, the gripper assembly 132 further comprises a rotation servo (not shown) to rotate the gripper assembly 132 and / or the gripper jaw 118 about the W-axis. In some embodiments the W-axis and the Z-axis are coaxial, but in other embodiments the W-axis and the Z-axis are offset This means that the gripper jaws 118 can be rotated to better grasp long thin objects across their narrow dimensions.

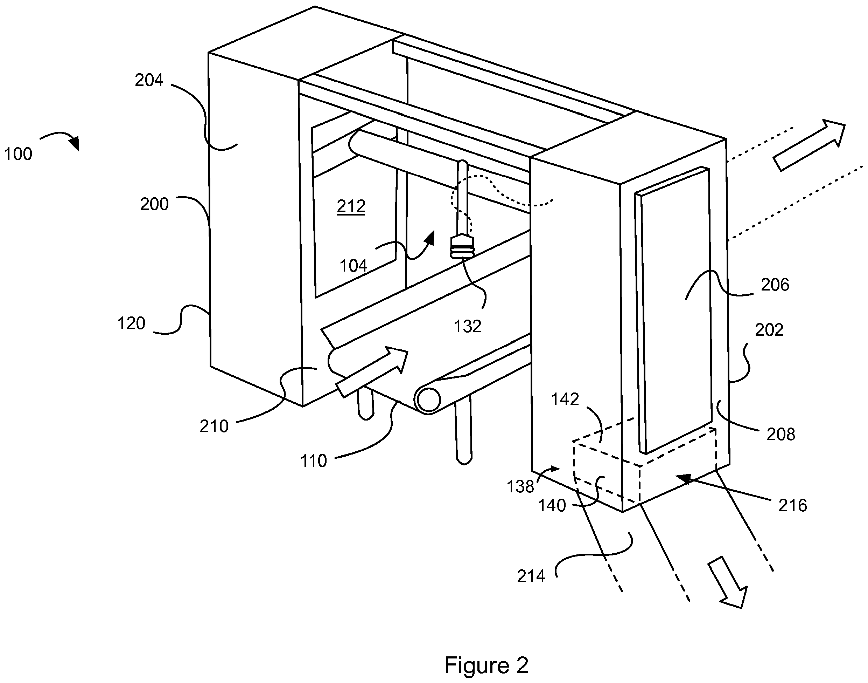

Additionally or alternatively in a more preferable embodiment, the gripper assembly (132) can be a suction gripper, as shown in Figure 2 for gripping the objects using negative pressure. The suction gripper can have a suction cup which is substantially symmetric about the Z-axis. This means that the suction gripper does not need to be rotated about the Z-axis to achieve an optimal orientation with respect to the objects 106a, 106b, 106c. This means that the gripper assembly rotation servo is not required with a suction gripper. In the case with an asymmetrical suction gripper 132, the gripper assembly 132 comprises a rotation servo to rotate the gripper assembly 132 about the W-axis as previously discussed above.

In other embodiments, the gripper assembly 132 of the manipulator 104 can be any suitable means for physically engaging and moving the objects 106a, 106b, 106c. Indeed, the manipulator 104 can be one or more tools for grasping, securing, gripping, cutting or skewering objects. In further embodiments the manipulator 104 can be a tool configured for interacting with and moving an object at distance such as an electromagnet or a nozzle for blowing compressed air.

As mentioned, the controller 102 is configured to send instructions to the servos 112, 114, 116 of the manipulator 104 to control and interact with objects 106a, 106b, 106c on the conveyor belt 110. The controller 102 is connectively coupled to at least one sensor 134 for detecting the objects 106a, 106b, 106c on the conveyor belt 110. The at least one sensor 134 is positioned in front of the manipulator 104 so that detected measurements of the objects 106a, 106b, 106c are sent to the controller 104 before the objects 106a, 106b, 106c enter the working area 108. In some embodiments, the at least one sensor 134 can be one or more of a RGB camera, an infrared camera, a metal detector, a hall sensor, a temperature sensor, visual and / or infrared spectroscopic detector, 3D imaging sensor, terahertz imaging system, radioactivity sensor and / or a laser. The at least one sensor 134 can be any sensor suitable for determining a parameter of the object 106a, 106b, 106c.

Figure 1 shows that the at least one sensor 134 is positioned in one position. The at least one sensor 134 is mounted in a sensor housing 136 to protect the sensor 134. In other embodiments, a plurality of sensors are positions along and around the conveyor belt 110 to receive parameter data of the objects 106a, 106b, 106c.

The controller 102 receives information from the at least one sensor 134 corresponding to one or more objects 106a, 106b, 106c on the conveyor belt 110. The controller 102 determines instructions for moving the manipulator 104 based on the received information according to one or more criteria. Various information processing techniques can be adopted by the controller 102 for controlling the manipulator 104. Such information processing techniques are described in WO2012/089928, WO2012/052615, WO2011/161304, WO2008/102052 which are incorporated herein by reference.

Once the manipulator 104 has received instructions from the controller 102, the manipulator 104 executes the commands and moves the gripper assembly 132 to pick an object 106c from the conveyor belt 110. The process of selecting and manipulating an object on the conveyor belt 110 is known as a "pick".

Once a pick has been completed, the manipulator 104 drops or throws the object 106c into a chute 138. An object 106c dropped into the chute 138 is considered to be a successful pick. A successful pick is one where an object 106c was selected and moved to the chute 138 associated with the same fraction of waste as the object 106c.

The chute 138 comprises a chute opening 142 in the working area 108 for dropping picked objects 106c. The chute opening 142 of the chute 138 is adjacent to the conveyor belt 110 so that the manipulator 104 does not have to travel far when conveying a picked object 106c from the conveyor belt 110 to the chute opening 142. By positioning the chute opening 142 of the chute adjacent to the conveyor belt 110, the manipulator 104 can throw, drop, pull and / or push the object 106c into the chute 138.

The chute 138 comprises walls 140 defining a conduit for guiding picked objects 106c into a fraction receptacle (not shown) for receiving a sorted fraction of waste. In some embodiments, a fraction receptacle is not required at the sorted fractions of waste are piled up beneath the chute 138. Figure 1 only shows one chute 138 associated with the manipulator 104. In other embodiments, there can be a plurality of chutes 138 and associated openings 142 located around the conveyor belt 110. Each opening 142 of the different chutes 138 is located within the working area 108 of the manipulator 104. The walls 140 of the conduit can be any shape, size or orientation to guide picked objects 106c to the fraction receptacle. In some embodiments, the successfully picked objects 106c move under the force of gravity from the chute opening 142 of the chute 138 to the fraction receptacle. In other embodiments, the chute 138 may guide the successfully picked objects 106c to another conveyor belt (not shown) or other means for moving the successfully picked objects 106c to the fraction receptacle.

Turning to Figure 2, another embodiment will be discussed. Figure 2 shows a schematic perspective view of a waste sorting gantry robot 100. The conveyor belt 110 is positioned between the gantry frame 120. For the purposes of clarity, no objects 106a, 106b, 106c have been shown on the conveyor belt 110.

The gantry frame 120 as shown in Figure 2 comprises a different configuration and construction from that shown in Figure 1. In particular, the gantry frame 120 comprises two cabinets 200, 202. The cabinet 200, 202 comprise internal struts and horizontal beams similar to those discussed in reference to the embodiments shown in Figure 1. However the cabinet structures 200, 202 comprise at least one enclosure 204. The enclosure 204 surrounds at least a part of the gantry frame 120. In some embodiments, there can be a plurality of enclosures 204, each surrounding one or more parts of the waste sorting gantry robot 100. The enclosure 204 can be a solid sheet material 204 or can be perforated so that one or more internal parts of the waste sorting gantry robot 100 are visible. The enclosure 204 for example, surrounds the chute 138 on three sides. The enclosure 204 also surrounds at least a portion of the manipulator 104. In other embodiments, the enclosure 204 can completely surround and enclose the waste sorting gantry robot 100. In this case, the enclosure 204 comprises openings for the waste sorting objects 106a, 106b, 106c to be conveyed into the working area 108. In some embodiments, and as shown in Figure 2 the enclosure 204 covers the struts and the horizontal beams providing the walls, top and bottoms of the cabinets 200, 202.

The cabinets 200, 202 provide shielding for the delicate parts to the manipulator 104 such as the servos (not shown for clarity). This helps protect the manipulator from be damaged from stray waste objects. Furthermore the cabinet structures 200, 202, provide a barrier between the moving parts and the human operator. This means that the human operator cannot accidentally stray into the working area 108 of the waste sorting gantry robot.

One or both of the cabinets 200, 202 can comprise an external access door 206. The external access door 206 allows access to the interior of the cabinets 200, 202. The external access door 206 is located on a wall 208 of the cabinet 200, 202 which is opposite the conveyor belt 110 and faces outwards. This means that when the external access door 206 is opened, the opened access door 206 does not interfere with any other part of the waste sorting gantry robot 100.

The interior surface 210 of one or both of the cabinets 200, 202 comprises an opening 212. This means that the wall of the cabinets 200, 202 which is adjacent to the conveyor belt 110 is open. Accordingly, the manipulator 104 can move within one or both of cabinets 200, 202. This means that the manipulator 104 can be controlled to move to a "home" position within one or both of the cabinets 200, 202. Moving the manipulator 104 within the cabinet 200, 202 makes inspection and maintenance of the manipulator 104 easier. In this way, the plane of the working area 108 extends into the cabinets 200, 202. The working area 108 has not been shown in Figure 2 for the purposes of clarity.

The cabinet 202 is located above a chute 138 and similar to the embodiments discussed in reference to Figure 1, the chute 138 comprises a chute opening 142 (not shown in Figure 2 because this is within the cabinet 202) in the working area 108 for dropping picked objects 106c. The chute opening 142 of the chute 138 is adjacent to the conveyor belt 110 within the gantry frame 120. By positioning the chute opening 142 of the chute adjacent to the conveyor belt 110, the manipulator 104 can throw, drop, pull and / or push the object 106c into the chute 138.

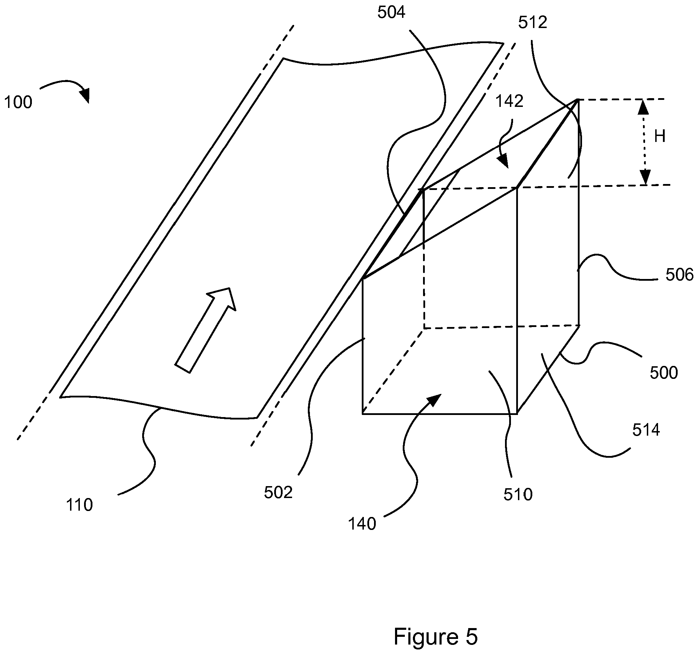

Another embodiment of the chute 138 will now be described in reference to Figure 5. Figure 5 shows a schematic representation of the gantry frame 120, the conveyor 110 and the chute 138. In some embodiments the chute 138 comprises a first part 500 which is above the floor where the waste sorting gantry robot 100 is installed. The chute 138 can also comprise a second part which is a guide chute 214 coupled to the chute (not shown in Figure 5, but shown in Figure 2) which is not part of the gantry frame 120.

In some embodiments, the chute 138 comprises a plurality of chute walls 140 which are the walls 140 of chute above the floor. The chute walls 140 are an integral part of the gantry frame 120.

As shown in Figure 5, a front chute wall 502 is located next to the conveyor belt 110. In some embodiments, the height of the front chute wall 502 is from the level of the floor to the height of the conveyor 110.

In some embodiments, the front chute wall 502 comprises a guard wall 504. The guard wall 504 is connected to the front chute wall 502 and extends in the Z-axis slightly higher than the front chute wall 502. Accordingly, the guard wall 504 prevents objects 106a, 106b, 106c on the conveyor belt 110 accidentally sliding and / or falling into the chute 138.

The chute 138 further comprises a back chute wall 506 which is on an opposite side of the chute 138 to the front chute wall 502. The back chute wall 506 is higher than the front chute wall 502 and the guard wall 504. This allows thrown objects 106c to hit the back chute wall 506. When a picked object 106c hits the back chute wall 506, the back chute wall 506 stops the movement of the picked object 106c in the Y-axis -direction and the picked object 106c falls into the chute 138.

In other words, at least a portion 508 of the upper part of the back chute wall 506 is higher by a distance H above the conveyor belt 110 level. The chute walls 510, 512 which are perpendicular to the conveyor belt 110 extend from a floor level to angled upper parts which meet the front chute wall 502 and the back chute wall 506. Thus, the height of the perpendicular chute walls 510, 512 varies as the perpendicular walls 510, 512 extend from the front chute wall 502 to the rear chute wall 506.

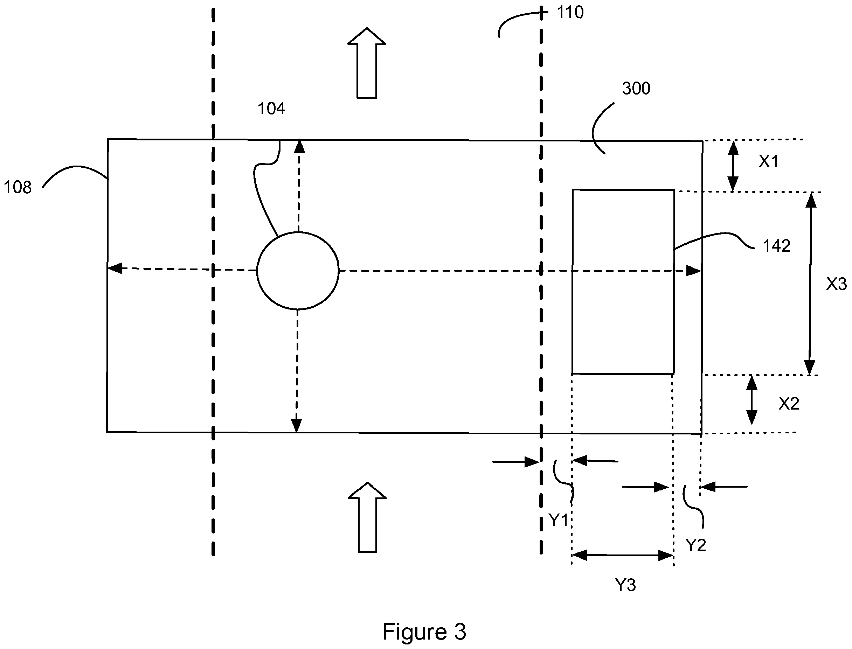

In some embodiments, the chute opening 142 dimensions are smaller than dimensions of the gantry frame 120, for example as shown in Figure 3. In this way, the walls 204 of gantry frame 120 are separate from the chute walls 140.

As shown in Figure 5, the chute opening 142 in the gantry frame 120, comprises a predetermined size. The size of the chute opening 142 can have, different predetermined dimensions.

The chute 138 also comprises a lower chute opening 514 which is connected to the floor hole 216 (not shown in Figure 5, but shown in Figure 2) on the floor. In some embodiments, the chute 138 does not vary in cross sectional area along its length and the chute opening 142 is the same size as the lower chute opening 514. In some embodiments, the floor hole 216 may be larger than the lower chute opening 514. In this case, a floor plate (not shown) which covers the floor hole 216 is installed between the gantry frame 120 and the floor. The floor plate comprises a hole which is equal to the size of the lower chute opening 514. In this way, the floor plate is large enough to cover the floor hole 216 on the floor. This is to prevent anything else, including people, falling into chute 138 or the guide chute 214.

In some embodiments, the floor hole 216 is smaller than the lower chute opening 514. In this case, a conversion adaptor (not shown) is installed. The conversion adaptor varies in the dimensions of the chute 138 from the dimensions of the lower chute opening 514 to the dimensions of the floor hole 216. This is to ensure that all the picked objects 106c are able to fall through the floor hole 216. In this way, the conversion adaptor is arranged to couple the chute 138 to a floor hole wherein the dimensions of the chute and the floor hole are different. For example, the dimensions of the chute can be smaller in cross section than the floor hole. Conversely, the dimensions of the chute can be larger in cross section than the floor hole. The conversion adaptor can narrow or widen depending on the relative dimensions of the chute and the floor hole.

As mentioned, some gantry frames 120 may requires a conversion adaptor. The conversion adaptor is specific to the dimensions of the installation site and the dimensions of the floor hole 216. However, the dimensions of the chute opening 142 and the lower chute opening 514 can be predetermined and fixed. Alternatively the dimensions of the chute opening 142 and the lower chute opening 514 can be limited to few predefined dimensions. Advantageously, this means that the gantry frame 120 design, including the chute walls 140, will be independent of the installation site.

Since the chute 138 is within the cabinet 202, the manipulator 104 can move into the cabinet 202 to drop a picked object 106c into the chute 138. The chute 138 is in communication with a receptacle (not shown) for receiving sorted picked objects 106c. The receptacle can be a bin, hopper, skip or other suitable container for receiving sorted waste products. In other embodiments, the sorted waste is allowed to pile on the floor and each pile of sorted waste can be separated by partitions.

The position of the chute 138 with respect to the working area will now be discussed in reference to Figure 3. Figure 3 shows a schematic plan view of the working area 108. The manipulator 104 can move anywhere within the working area 108. The path of the conveyor belt 110 intersects with the working area 108. The chute opening 142 is located within the working area 108. At least a portion 300 of the working adjacent to the conveyor belt 110 is within the cabinet 200. The cabinet 200 is not shown for the purposes of clarity.

In this way, the gantry frame 120 and cabinet 202 comprises an integral chute 138 for receiving picked objects 106c. The chute opening 142 has a predetermined orientation, size and location within the working area 108. The working area 108 of the manipulator 104 will remain constant with respect to the gantry frame 120. Accordingly, in this way, the chute opening 142 is fixed with respect to the gantry frame 120 and the cabinet 202. For example, the chute opening 142 is located a fixed distance X1, X2 from the edges of the working area 108 in the X-axis. Similarly the chute opening 142 is a fixed distance Y1 from the conveyor belt 110 and a fixed distance from the edge of the working area 108 in the Y-axis. The dimensions of the chute opening 142 are also predetermined and the distance X3 and Y3 are fixed.

By providing an integral chute 138 in the gantry frame 120, this means the distances X1, X2, X3, Y1, Y2, Y3 can be pre-set before the gantry frame 120 and the waste sorting gantry robot 100 leaves the factory. This means that the distances, size and orientation of the chute opening 142 remains constant and will not change when the waste sorting gantry robot is installed.

When fixing the location of the chute opening 142 with respect to the gantry frame 120, the distances X1, X2, X3, Y1, Y2, Y3 can be selected. In some embodiments, X3 and Y3 are made a large as possible. Additionally or alternatively in some embodiments Y1 and Y2 are zero. This means that dropping picked objects into the chute 138 may be easier.

By fixing the size, orientation of the chute opening 142 with respect to the gantry frame 120, the installation of the waste sorting gantry robot 100 is simplified. In particular, the chute opening 142 is always the same with respect to the gantry frame 120. This means that the parameters for determining instructions for the controller instructing the manipulator 104 to drop a picked object do not vary between waste sorting gantry robots 100.

Previously the chute opening could be located anywhere with respect to the manipulator 104 and would vary because each site and installation was different. This was because the receptacle for receiving sorted waste objects would not be located in the same place at each site. Accordingly, the chute dimensions and orientation would have to be changed to make sure sorted waste objects were successfully guided to the receptacle. This meant that an engineer would need to be required for installation to measure and reprogram the waste sorting gantry robot parameters once physically installed. By providing an integral chute, the variability of the chute opening between different sites is removed.

In some embodiments the dimensions of the chute opening are between 20cm ≤ X3 ≤ 50cm wide by 30cm ≤ Y3 ≤ 80cm long. Accordingly, the dimensions of X3 and Y3 mean that most objects can be successfully dropped into the chute opening. In some embodiments, the dimensions are as follows:

| **Dimension** | **Size (cm)** |
|---|---|
| X1 | 0 - 20 |
| X2 | 0 - 20 |
| X3 | 30 - 70 |
| Y1 | 0 - 20 |
| Y2 | 0 - 20 |
| Y3 | 10 - 40 |

Although not shown in Figures 1 to 3, there can be additional integral chutes located within the gantry frame. In this way the walls 140 of the chute 138 are fixed to the gantry frame 120. The chute 138 can be welded, bolted, glued or fastened using any other suitable means to the gantry frame. In other embodiments, the gantry frame 120 comprises sheet material 204 which form the walls of the cabinets 200, 202 and the walls 140 of the chute 138. Optionally in some embodiments, one or more walls of the cabinets 200, 202 comprise the chute opening 142 of the chute 138. In this way, a hole in a plate or wall 204 of the gantry frame 120 is the chute opening 142. The chute opening 142 can be orientated to be in any plane or planes so long as the size of the chute opening 142 is large enough to received picked objects 106c.

For example, another chute opening 142 can be located within the other cabinet 200 aligned along the same line parallel to the Y-axis. Additional chutes 138 can be added, for example, four chutes can be arranged each at a corner of the working space 108. Again each of the four chutes 138 are integral with the gantry frame 120. In other embodiments, there can be any number of chutes 138 for receiving sorted waste objects.

Returning to Figure 2, the chute 138 is visible. As previously mentioned, the gantry frame 120 comprises an integral chute 138 with a chute opening 142. The integral chute 138 in some embodiments can be aligned with a hole 216 in the floor . This means that the dropped picked objects 106c, fall straight through the integral chute 138 and through the floor hole 216 and into the receptacle.

In some cases it is not possible to align a receptacle for sorted waste objects directly underneath the waste sorting gantry robot 100. Accordingly, alternatively in some embodiments the integral chute 138 is connected to a guide chute 214 for guiding the dropped picked objects from the integral chute 138 to the receptacle. Both the chute 138 and the guide chute 214 are connected to the floor hole 216. The guide chute 214 can be orientated at a different angle to the cabinet to guide the picked waste objects 106c laterally away from the waste sorting gantry robot 100. In other embodiments, the guide chute 214 can vary in cross sectional dimensions to accommodate a difference in dimensions and shape between the integral chute 138 (e.g. rectangular) and a hole for a receptacle. The guide chute 214 can be flared to widen the chute and the guide chute 214 can be narrow to constrain the chute 214. If required the guide chute 214 can comprise kinks or dog-legs in order to guide the picked waste objects through narrow or congested spaces. As mentioned previously, additionally or alternatively, another conveyor belt 110 can be used to transport picked objects 106c away from the integral chute 138. For example, picked objects 106c fall onto a secondary conveyor belt (not shown).

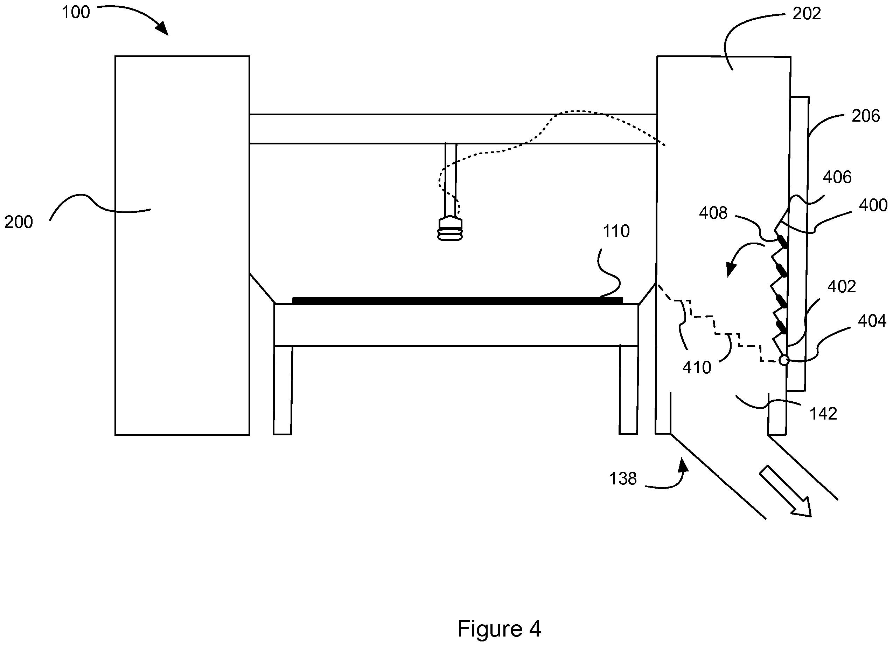

The waste sorting gantry robot 100 will now be further described in reference to Figure 4. Figure 4 shows a schematic cross sectional drawing of the waste sorting gantry robot 100. As mentioned with respect to the embodiments shown in Figure 2, one of the cabinets 202 comprises an external access door 206. The external access door 206 covers the interior of the cabinet 202 during operation. The external access door 206 can cover one or more control panels.

The cabinet 202 further comprises a maintenance door 400. During operation when the external access door 206 is closed, the maintenance door 400 is not visible or accessible. The maintenance door 400 is shown in the "closed" upright position. In this way, when the external access door 206 is opened, the maintenance door 400 is shut and forms an internal barrier, preventing access to the interior of the gantry frame 120 and the manipulator 104. In some embodiments, the maintenance door 400 is 1 meter tall by 50cm wide. Accordingly, the maintenance door 400 is approximately waist high when in the closed position. This means that a human operator cannot trip over and fall into the gantry frame 120 when the maintenance door 400 is closed. The dimension of the maintenance door 400 provide an access space that when the maintenance door 400 is opened a person can fit into the interior of the cabinet 202.

The maintenance door 400 pivots at the bottom 402 of the door about hinge 404. Figure 4 shows the maintenance door 400 in an inclined "open" position. Accordingly, when the maintenance door 400 is opened, the top 406 of the maintenance door rotates about the hinge 404 and pivots until the top of the door 406 rests against the side of the conveyor belt 110. The side of the conveyor belt 110 physically stops the maintenance door 400 from moving any further towards the conveyor belt 110.

The top of the door 406 can comprise rubber stoppers or another shock absorbing material on the side facing the conveyor belt. This means that the maintenance door 400 repeatedly being opening against the conveyor belt 110 reduces the chance of the conveyor belt becoming damaged.

The maintenance door 400 can comprise one or more latches and / or handles for locking the maintenance door 400 in the closed position and / or the open position. One or more lock-out sensors (not shown) are connectively coupled to external access door 206 and / or the maintenance door 400. The one or more lock-out sensors can be a switch for detecting that the doors 206, 400 are open. The one or more lock out sensors are connectively coupled to the controller 102. This means that the controller 102 knows that the external access door 206 and the maintenance door 400 are open and operation of the manipulator is forbidden.

When the maintenance door 400 is in the open position, the maintenance door 400 covers at least a portion of the integral chute 138. This means that access to the interior of the cabinet 202, the manipulator 104 and the conveyor belt 110 is not impeded by the opening 142 of the chute. In some embodiments, the maintenance door 400 completely covers the opening 142 of the integral chute 138. This means that is not possible to step into the opening 142 of the chute 138 and fall over when the maintenance door is in the open position. Advantageously, this means that the space created by incorporating the integral chute 138 into the gantry frame can serve a dual purpose. The same space in the gantry frame 120 which is used for the integral chute 138 during operation is used as an access and maintenance space when the maintenance door 400 is in the open position.

The maintenance door 400 can comprise one or more latches and / or handles (not shown) for holding the maintenance door 400 in the closed and / or the closed position. The latches can be manually operated. Additionally or alternatively, the latches can be automatically operated by the controller 102. The handles can be used to manually lower the maintenance door 400 into the open position against the conveyor belt 110.

The maintenance door 400 is made from a stiff material such as steel and is arranged to support the weight of a person. Accordingly, it is possible to stand on the maintenance door 400 when the maintenance door 400 is in the open position.

In some embodiments, the maintenance door 400 comprises one or more grips elements 408 for increasing the friction between the surface of the maintenance door 400 and footwear. In some embodiments, the grip elements are rubber grips, raised bumps in the maintenance door, studs, grills or any other suitable means for providing additional grip on the surface of the maintenance door 400.

Since the maintenance door 400 is inclined in the open position, the maintenance door 400 can be provided with steps 410 as shown in Figure 4. The steps 410 provide assistance for a person climbing into the interior of the cabinet and inspecting e.g. the manipulator 104. The maintenance door as shown in Figure 4 has five steps, but the maintenance door can have any number of steps depending on the incline and the height of the conveyor belt 110 and the manipulator 104 above the floor. The steps 410 can be integral to the maintenance door 400 such that the maintenance door 400 comprises folded and bent material formed into steps.

Alternatively, the maintenance door 400 can comprise one or more fastening elements for receiving separate steps. In this way, the maintenance door 400 is opened and the steps 410 or ladder is placed and fastened to the maintenance door 400. For example, the steps can be clipped or bolted into place when the maintenance door is opened 400. Additionally or alternatively the steps 410 can hook over the side of the conveyor belt 110 for additional stability. In this way, the maintenance door 400 manufacture can be simpler. The separate steps and / or ladder can be stored inside the cabinet 202 when the maintenance door 400 and the external access door 206 are closed.

Accordingly, by providing a maintenance door 400 in the gantry frame 120, a human operator can inspect and maintain the waste sorting gantry robot from the side quickly and safely. This means that maintenance does not have to be conducted by first crawling along the conveyor belt to access the manipulator 104. This make maintenance safer and quicker.

In other embodiments, the chute 138 arrangements as described with respect to the Figures 1 to 4 can also be used with other types of sorting robot was are not waste sorting robots. For example, the chute 138 can be used with industrial robots in the automotive industry, food industry etc.

In another embodiment, two or more embodiments are combined. Features of one embodiment can be combined with features of other embodiments.

Embodiments of the present invention have been discussed with particular reference to the examples illustrated. However it will be appreciated that variations and modifications may be made to the examples described within the scope of the invention as defined by the appended claims.

## Claims

1. A waste sorting robot (100) comprising:
a frame (120),
a manipulator (104) for interacting with one or more waste objects (106a, 106b, 106c) to be sorted within a working area (108); and wherein the manipulator (104) is moveably mounted on the frame (120) and the manipulator (104) is moveable within the working area (108);
a conveyor (110) for moving one or more waste objects (106a, 106b, 106c) to be sorted within the working area (108);
a chute (138) for receiving sorted objects moved by the manipulator (104) from the conveyor (110) to a chute opening (142);
wherein the frame (120) comprises a maintenance door (400) for accessing the manipulator (104) and / or the conveyor (110) and the maintenance door (104) is moveable to a position in which the maintenance door (104) covers at least a portion of the chute opening (142) and **characterised in that** the maintenance door (400) covers the chute opening (142) when the manipulator (104) and / or the conveyor (110) is accessible.

2. A waste sorting robot (100) according to claim 1 wherein the chute opening (142) is positioned at a predetermined distance from the conveyor (110) and wherein at least a portion of the chute (138) is integral with the frame (120).

3. A waste sorting robot (100) according to any of claims 1 to 2 wherein the maintenance door (400) is pivotable about a hinge (404) at the bottom of the maintenance door (400).

4. A waste sorting robot (100) according to any of claims 1 to 3 wherein the maintenance door (400) comprises steps (410) for providing assistance for a person climbing into the waste sorting robot (100) when the maintenance door (400) is open.

5. A waste sorting robot (100) according to any of claims 1 to 4 wherein the waste sorting robot (100) comprises a lock-out sensor (134) wherein the maintenance door (400) actuates the lock-out sensor (134) when the maintenance door (400) is opened.

6. A waste sorting robot (100) according to any of claims 1 to 5 wherein the waste sorting robot(100) comprises at least one latch for opening the maintenance door (400).

7. A waste sorting robot (100) according to any of the claims 1 to 6 wherein the maintenance door (400) abuts the conveyer (110) when the maintenance door (400) is in an open position such that the maintenance door (400) remains in the open position.

8. A waste sorting robot (100) according to any of claims 1 to 7 wherein the maintenance door (400) is covered by an external access door (206) for preventing accidental opening of the maintenance door (400) when the external access door (206) is closed.

9. A waste sorting robot (100) according to any of the preceding claims wherein the opening (142) is adjacent to the conveyor (110) in the working area (108).

10. A waste sorting robot (100) according to any of the preceding claims wherein the frame is a gantry frame (120) and the gantry frame (120) comprises a floor plate comprising an opening connected to the chute (138).

11. A waste sorting robot (100) according to any of the claims 1 to 9 wherein the frame (120) is a gantry frame (120) and the gantry frame (120) is mounted on a floor having a floor hole (216) below the chute (138) and comprises a conversion adaptor for coupling the chute (138) to the floor hole (216) wherein the dimensions of the chute (138) and the floor hole (216) are different.

12. A waste sorting robot (100) according to any of the preceding claims wherein the waste sorting robot (100) comprises an enclosure mounted to the frame (120) and wherein the enclosure surrounds the chute (138).

## Patentansprüche

1. Abfallsortierroboter (100), umfassend:
einen Rahmen (120),
einen Manipulator (104) zum Interagieren mit einem oder mehreren innerhalb eines Arbeitsbereichs (108) zu sortierenden Abfallobjekten (106a, 106b, 106c); und wobei der Manipulator (104) beweglich an dem Rahmen (120) montiert ist und der Manipulator (104) innerhalb des Arbeitsbereichs (108) beweglich ist;
einen Förderer (110) zum Bewegen eines oder mehrerer innerhalb des Arbeitsbereichs (108) zu sortierenden Abfallobjekte (106a, 106b, 106c);
eine Schütte (138) zum Aufnehmen sortierter Objekte, die durch den Manipulator (104) von dem Förderer (110) zu einer Schüttenöffnung (142) bewegt wurden;
wobei der Rahmen (120) eine Wartungstür (400) für den Zugang zu dem Manipulator (104) umfasst und/oder der Förderer (110) und die Wartungstür (104) in eine Position bewegbar sind, in der die Wartungstür (104) mindestens einen Abschnitt der Schüttenöffnung (142) bedeckt, und **dadurch gekennzeichnet, dass** die Wartungstür (400) die Schüttenöffnung (142) bedeckt, wenn der Manipulator (104) und/oder der Förderer (110) zugänglich ist.

2. Abfallsortierroboter (100) nach Anspruch 1, wobei die Schüttenöffnung (142) in einem vorbestimmten Abstand von dem Förderer (110) positioniert ist und wobei mindestens ein Abschnitt der Schütte (138) mit dem Rahmen (120) einstückig ist.

3. Abfallsortierroboter (100) nach einem der Ansprüche 1 bis 2, wobei die Wartungstür (400) um ein Scharnier (404) an der Unterseite der Wartungstür (400) schwenkbar ist.

4. Abfallsortierroboter (100) nach einem der Ansprüche 1 bis 3, wobei die Wartungstür (400) Stufen (410) umfasst, um einer Person beim Einsteigen in den Abfallsortierroboter (100) Unterstützung bereitzustellen, wenn die Wartungstür (400) offen ist.

5. Abfallsortierroboter (100) nach einem der Ansprüche 1 bis 4, wobei der Abfallsortierroboter (100) einen Sperrsensor (134) umfasst, wobei die Wartungstür (400) den Sperrsensor (134) betätigt, wenn die Wartungstür (400) geöffnet wird.

6. Abfallsortierroboter (100) nach einem der Ansprüche 1 bis 5, wobei der Abfallsortierroboter (100) mindestens einen Riegel zum Öffnen der Wartungstür (400) umfasst.

7. Abfallsortierroboter (100) nach einem der Ansprüche 1 bis 6, wobei die Wartungstür (400) an dem Förderer (110) anliegt, wenn die Wartungstür (400) in einer offenen Position vorliegt, sodass die Wartungstür (400) in der offenen Position verbleibt.

8. Abfallsortierroboter (100) nach einem der Ansprüche 1 bis 7, wobei die Wartungstür (400) durch eine externe Zugangstür (206) bedeckt ist, um ein versehentliches Öffnen der Wartungstür (400) zu verhindern, wenn die externe Zugangstür (206) geschlossen ist.

9. Abfallsortierroboter (100) nach einem der vorstehenden Ansprüche, wobei die Öffnung (142) dem Förderer (110) in dem Arbeitsbereich (108) benachbart ist.

10. Abfallsortierroboter (100) nach einem der vorstehenden Ansprüche, wobei der Rahmen ein Portalrahmen (120) ist und der Portalrahmen (120) eine Bodenplatte umfasst, die eine mit der Schütte (138) verbundene Öffnung umfasst.

11. Abfallsortierroboter (100) nach einem der Ansprüche 1 bis 9, wobei der Rahmen (120) ein Portalrahmen (120) ist und der Portalrahmen (120) auf einem Boden montiert ist, der ein Bodenloch (216) unter der Schütte (138) aufweist, und einen Konvertierungsadapter zum Koppeln der Schütte (138) mit dem Bodenloch (216) umfasst, wobei die Abmessungen der Schütte (138) und des Bodenlochs (216) unterschiedlich sind.

12. Abfallsortierroboter (100) nach einem der vorstehenden Ansprüche, wobei der Abfallsortierroboter (100) ein an dem Rahmen (120) montiertes Gehäuse umfasst und wobei das Gehäuse die Schütte (138) umgibt.

## Revendications

1. Robot de tri de déchets (100) comprenant :
un cadre (120),
un manipulateur (104) destiné à interagir avec un ou plusieurs objets de déchets (106a, 106b, 106c) à trier dans une zone de travail (108) ; et dans lequel le manipulateur (104) est monté mobile sur le cadre (120) et le manipulateur (104) est mobile à l'intérieur de la zone de travail (108) ;
un transporteur (110) destiné à déplacer un ou plusieurs objets de déchets (106a, 106b, 106c) à trier à l'intérieur de la zone de travail (108) ;
une goulotte (138) destinée à recevoir des objets triés déplacés par le manipulateur (104) depuis le transporteur (110) vers une ouverture de goulotte (142) ;
dans lequel le cadre (120) comprend une porte de service (400) permettant d'accéder au manipulateur (104) et/ou au transporteur (110) et la porte de service (104) peut être déplacée dans une position dans laquelle la porte de service (104) recouvre au moins une partie de l'ouverture de goulotte (142), et **caractérisé en ce que** la porte de service (400) recouvre l'ouverture de goulotte (142) lorsque le manipulateur (104) et/ou le transporteur (110) est(sont) accessible(s).

2. Robot de tri de déchets (100) selon la revendication 1, dans lequel l'ouverture de goulotte (142) est positionnée à une distance prédéterminée du transporteur (110) et dans lequel au moins une partie de la goulotte (138) est formée d'un seul tenant avec le cadre (120).

3. Robot de tri de déchets (100) selon l'une quelconque des revendications 1 à 2, dans lequel la porte de service (400) peut pivoter autour d'une charnière (404) située au bas de la porte de service (400).

4. Robot de tri de déchets (100) selon l'une quelconque des revendications 1 à 3, dans lequel la porte de service (400) comprend des marches (410) destinées à fournir une aide à une personne montant dans le robot de tri de déchets (100) lorsque la porte de service (400) est ouverte.

5. Robot de tri de déchets (100) selon l'une quelconque des revendications 1 à 4, dans lequel le robot de tri de déchets (100) comprend un capteur de verrouillage (134), dans lequel la porte de service (400) actionne le capteur de verrouillage (134) lorsque la porte de service (400) est ouverte.

6. Robot de tri de déchets (100) selon l'une quelconque des revendications 1 à 5, dans lequel le robot de tri de déchets (100) comprend au moins un verrou permettant d'ouvrir la porte de service (400).

7. Robot de tri de déchets (100) selon l'une quelconque des revendications 1 à 6, dans lequel la porte de service (400) est en appui contre le transporteur (110) lorsque la porte de service (400) est dans une position ouverte de telle sorte que la porte de service (400) reste dans la position ouverte.

8. Robot de tri de déchets (100) selon l'une quelconque des revendications 1 à 7, dans lequel la porte de service (400) est recouverte d'une porte d'accès externe (206) destinée à empêcher une ouverture accidentelle de la porte de service (400) lorsque la porte d'accès externe (206) est fermée.

9. Robot de tri de déchets (100) selon l'une quelconque des revendications précédentes, dans lequel l'ouverture (142) est adjacente au transporteur (110) dans la zone de travail (108).

10. Robot de tri de déchets (100) selon l'une quelconque des revendications précédentes, dans lequel le cadre est un cadre de portique (120) et le cadre de portique (120) comprend une plaque de sol comprenant une ouverture reliée à la goulotte (138).

11. Robot de tri de déchets (100) selon l'une quelconque des revendications 1 à 9, dans lequel le cadre (120) est un cadre de portique (120) et le cadre de portique (120) est monté sur un sol présentant un trou de sol (216) en dessous de la goulotte (138) et comprend un adaptateur de conversion permettant de coupler la goulotte (138) au trou de sol (216), dans lequel les dimensions de la goulotte (138) et du trou de sol (216) sont différentes.

12. Robot de tri de déchets (100) selon l'une quelconque des revendications précédentes, dans lequel le robot de tri de déchets (100) comprend une enceinte montée sur le cadre (120) et dans lequel l'enceinte entoure la goulotte (138).
